# EUROPEAN PATENT SPECIFICATION

(11) **EP 0 520 115 B1**
(45) Date of publication and mention of the grant of the patent: **19.04.1995**
(21) Application number: 91480094.1
(22) Date of filing: 28.06.1991
(51) Int. Cl.: H01G 4/35, H01G 4/14, H01R 13/66, H01R 13/658

(54) **Flexible capacitor**
Flexibler Kondensator
Condensateur flexible

(43) Date of publication of application: 30.12.1992
(73) Proprietor: International Business Machines Corporation, Armonk, N.Y. 10504 (US)
(72) Inventor: Catala, Gilles, "Les Vergers", Bât. K., F-06140 Vence (FR); Lasmayoux, Casimir, F-06480 La Colle sur Loup (FR); Ferry, Michel, F-06220 Vallauris (FR); Vachee, Pierre, F-06610 La Gaude (FR); Paci, André, F-06600 Antibes (FR); Braquet, Henri J., F-06790 Aspremont (FR)
(74) Representative: Bonneau, Gérard

(56) References cited:
- DE-A- 3 345 942
- DE-A- 3 838 265
- US-A- 4 202 594
- JEE JOURNAL OF ELECTRONIC ENGINEERING, vol. 23, no. 237, September 1986, Tokyo,JP;pages 72 - 99; T. IZUMI: "Metallized Film Capacitors show their Mettle"
- PATENT ABSTRACTS OF JAPAN, vol. 15, no. 250 (E-118)26 June 1991;& JP-A-3079 012

## Description

The present invention relates to capacitors in general, and more specifically to a flexible capacitor, particularly suitable for use in a connection between two electrical machines.

From the case of a connection between a TV receiver and a video cassette player, to the case of connections between the remote frames or terminals of an elaborate data processing equipment, there are many instances when electrical machines share a physical communication media over which they exchange information signals.

The media quite often takes the form of a cable, which usually features at both ends a connector to fit in the matching connector implemented in each to-be-connected machine.

Whether it be in an office, industrial or home environment, such a connection between remote electrical machines needs to be radio frequency proof so as to not be perturbed by the inevitable ambient radio waves (such as the ones generated by other surrounding electrical machines), and must not itself radiate frequencies to a level higher than a threshold, usually set by national standards, beyond which other surrounding electrical machines could be perturbed (both phenomena are known under the generic term 'radio frequency interference').

The machines themselves therefore, are usually encased in a metal frame (or a frame coated with electrically conductive material) set at the local ground potential, and the cable itself comprises a bundle of internal electrical wires sheathed by a shield on the total length. It is indeed when the shield is connected at both ends, to a machine part at the ground potential so as to ensure electrical continuity, that the overall connection radiates less and is less susceptible to incident waves. Basically, the magnetic field generated by currents in the internal wires, compensates for the magnetic field generated by the current flowing within the shield in the opposite direction.

Such a compensation however, is fully effective only if the shield and the internal wires are geometrically concentric from one end of the cable to the other, so that mutual coupling is optimized.

On the other hand, the electrical continuity is conflicting with the safety requirements, also set by national standards, that an operator of a first machine, should not be able to touch any part which is at the ground potential of a second remote electrical machine. Chances are indeed very high that the ground potential at the local machine might be dangerously different from the ground potential at the remote machine. Besides, if a short circuit or any other problem occurred in the remote machine, no electrical hazard, transiting thru the shields, should be able to affect the operator at the local machine.

Therefore, the connection between the cable shield and any machine part at the ground potential, should feature a high impedance at the industrial frequencies (DC to a few hundreds Hertz).

In the past, attempts have been made to meet such conflicting requirements by inserting some capacitance between the cable shield and a part at the ground potential on all connected machines. Capacitance there ensures a high impedance at the industrial frequencies, and electrical continuity (low impedance) at the radio frequencies (practically, above 1MHz).

A well-known technique consists in soldering one or several solid state capacitors on the matching connector of any to-be-connected machine, so as to ensure capacitance between the shield of a plugged-in connector, and a part (usually the metal frame) of the connected machine, at the local ground potential.

This technique however has the main following drawbacks:
- The soldering of capacitors on a connector is neither technically easy nor cheap to realize in a manufacturing line.
- Strain on the connector (plug-in, plug-out) might later affect the quality of the soldering.
- The capacitors are not geometrically concentric with the cable internal wires, so that mutual coupling between the cable shield and wires is degraded ('pig tail' effect), and the overall shielding effect is ruined.

Another technique is taught by US Patent 4,202,594 to Coleman et al. It consists in a washer-like capacitor typically made of a ceramic dielectric inserted in a connector assembly as capacitance between an outer electrical conductor (connected to the cable shield), and the wall of a utilization device (machine part at the ground potential).

Whereas it solves the 'pig tail' effect problem, this technique still has strong drawbacks:
- It requires low tolerance flatness for both the surfaces of the outer electrical conductor and the device wall, otherwise the ceramic might break into pieces (problem amplified when the connector is not round-shaped).
- Strain on the connector is also damageable to the ceramic.
- High quality ceramics coated with conductive material are expensive to produce.

It is therefore an object of the present invention to fully meet electrical requirements regarding radio frequency interference and safety for a connection between two electrical machines, solve the problems still remaining with prior art techniques, and feature even more advantages cited below.

The invention includes a capacitor with a dielectric made of flexible material, coated on each side with conductive material, for insertion, for example at a connector level, between a cable shield being at the ground potential of a remote electrical machine, and a part on a local machine being at the local ground potential.
- Such a capacitor is technically easy therefore cheap to manufacture.
- Mechanical strain does not affect quality of the capacitor.
- The capacitor is geometrically concentric with the cable internal wires.

Besides:
- Because it is thin and flexible, it can adapt to any kind of already existing connection by bending in any direction.
- It can be manufactured or shaped on site so as to adapt to any desired configuration or capacitance value.

The invention specifically includes a flexible capacitor comprising:
- flexible dielectric layer means, coated with conductive material means on both sides via the use of adhesive means, the conductive material means forming a first and a second electrode,
- a first opening in the flexible dielectric means and the first electrode, of a first shape so as to allow the mechanical traversing of the capacitor plan by a protruding part of a connector, and
- a second opening in the second electrode, aligned with the first opening, of a second shape slightly larger than, but encompassing the first shape.

The invention will be better understood from the following detailed description read in conjunction with the following schematics:

Figure 1 showing an electrical machine assembly in which the invention is embodied.

Figure 2 showing a sliced view of the capacitor according to the invention.

Figure 3 showing a view of the various masks involved in the manufacturing of the capacitor according to the invention.

Figure 4 showing a detailed view of the back and the front sides of the capacitor according to the invention.

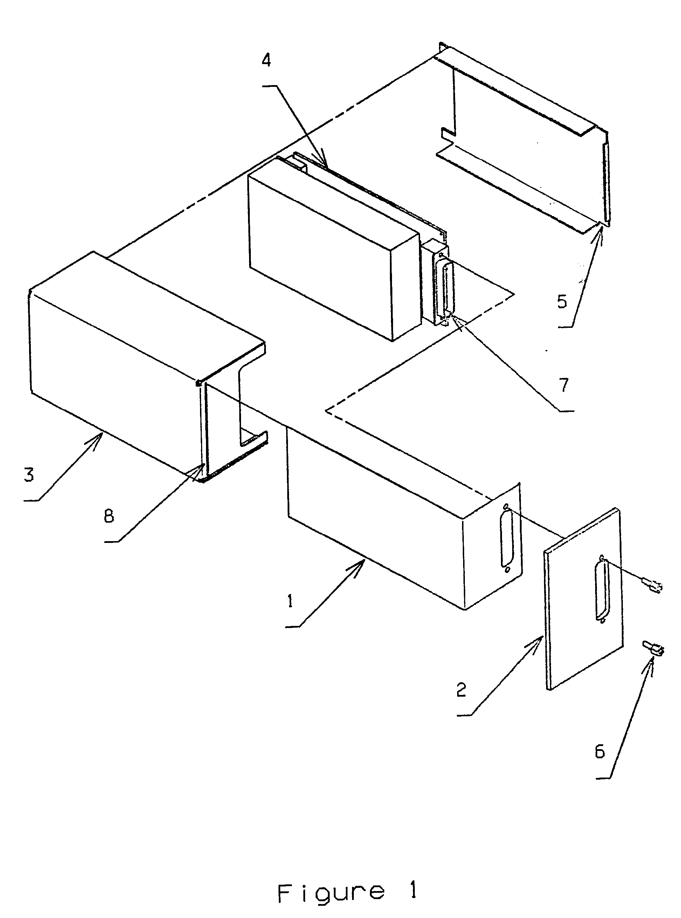

Figure 1 shows an electrical machine assembly in which the invention is embodied. A capacitor 1 comprises two portions bent at 90°: a front portion and a side portion. The front portion is inserted between a front panel 2, and a block composed of a box 3, a cover 5 and a printed circuit 4 on which are mounted electronic circuitry and a connector 7. The front portion includes a front electrode (facing towards item 2), and a back electrode (facing towards the connector). The side portion of the capacitor is inserted in a slot 8 cut in box 3.

Screws 6 enable the connector to be mechanically attached against the front panel. The rest of the assembly is tied together by means that are not described here, but are well known to the man skilled in the art (screws, clicks, etc...).

The front panel 2 is made of plastic coated with conductive material on its back side, except around the openings provided for the connector and the screws.

The box 3 and the cover 5 are made of conductive metal.

Other combinations of conductive/non conductive materials could be easily chosen by the man skilled in the art providing:
- No part of the printed circuit or the connector, including the screws, should be in electrical contact with any of the items 3, 5 or 2.
- Portion of the connector facing the front portion of the capacitor should be in electrical contact with the back electrode of that capacitor (a conductive gasket, not shown on the figure, could be placed between the connector and the back electrode, to improve electrical contact).
- Items 2, 3 and 5 should be in electrical contact together with the front electrode of the capacitor, and the local ground potential (a conductive gasket could also be inserted between the front electrode and the front panel).

When a matching connector, ending a shielded cable coming from a remote electrical machine, is plugged into connector 7, the cable shield is being connected to the back electrode of the capacitor thru the contact between the two matching connectors. Thus, capacitance is being introduced between parts at the local ground potential (2, 3, 5, front electrode of 1), and parts at the remote ground potential (cable shield, front of 7, back electrode of 1).

It will be obvious to the man skilled in the art that the embodiment of capacitor 1 in the assembly as shown Figure 1, is given as an example, and that many other types of embodiments involving panels, boxes, covers and connectors of different shape, size and way of assembling, are possible.

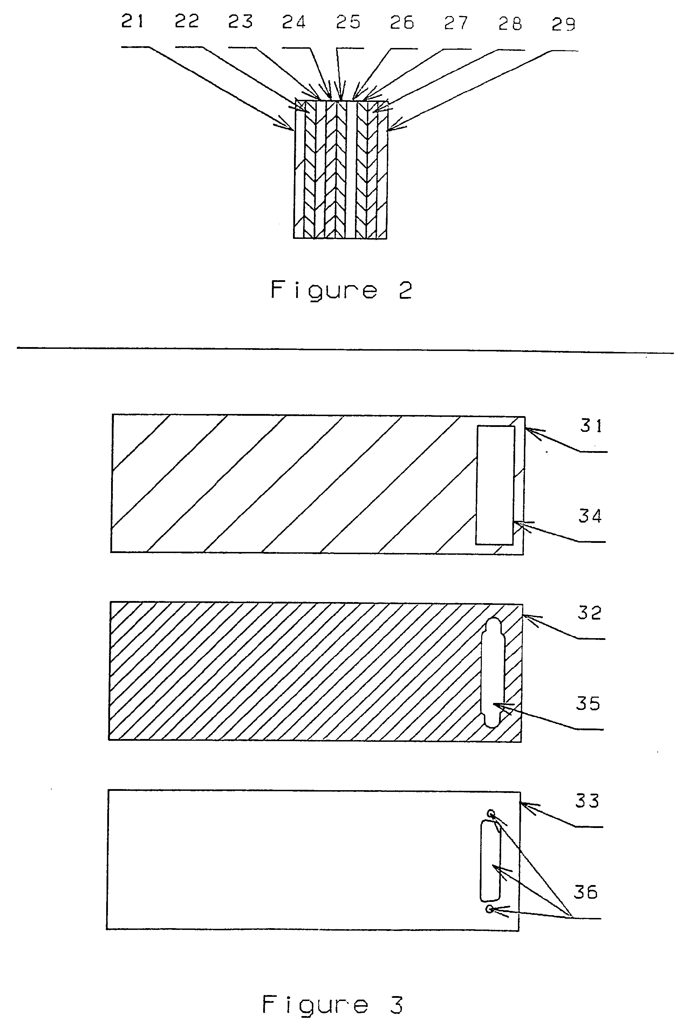

Figure 2 shows a sliced view of capacitor 1; it should be noticed that the represented thickness for the layers is out of scale.

The capacitor includes a layer 26 of polyester which is 23um thick, to serve as the dielectric, and two layers 24 and 28 of copper (a few dozen microns thick) to serve as the electrodes. Adhesive (polyester resin) material, 12um thick (layers 25 and 27), is used to stick the copper and the polyester together.

It will be obvious to the man skilled in the art, that a capacitor is at this point already available; other materials (such as nickel, etc...) of other thicknesses could have also been used for the electrodes, or for the dielectric (polyimide,...) or the adhesive, providing they are flexible enough materials to not break when bent or folded.

Improvements to such a capacitor can be achieved by coating the copper with a layer of tin (or any anti-oxidation material compatible with copper) on each side (layers 23 and 29) about 2um thick, so as to avoid oxidation, or by coating one or the two electrodes (only one electrode shown on Figure 2) with an insulating coverlay (plastic film) 21 so as to prevent electrical contact between one or the two electrodes, with a machine part not being at the same potential. Such a coverlay is 50um thick and is for example stuck to the next layer by an adhesive layer 22.

The assembly 21, 22, 23, 24 and 25 forms the back electrode of capacitor 1 (facing towards connector 7), while assembly 27, 28 and 29 forms the front electrode.

Figure 3 shows a view of the various masks involved in the manufacturing of capacitor 1; such a representation however is not intended to follow the order of manufacturing steps (see below).

Mask 33 applies for all layers of the capacitor but layers 21 and 28. It features three openings referenced 36: one for allowing protruding part of the connector to traverse thru the capacitor plan, and two small ones to allow screws thru (see also Figure 1). Note that other connector types might not require screws and the corresponding openings.

Mask 32 applies for layer 28 (copper on the front electrode). The shape for opening 35 there is larger by about 1mm and encompassing the outer limits of shape 36, if the two shapes were superposed.

Mask 31 applies for layer 21 (coverlay). An opening 34 features a rectangular shape encompassing both the shapes for openings 35 and 36.

It will be obvious to the man skilled in the art that the overall rectangular shape for the capacitor as shown in Figure 3, could be easily modified to any other shape so as to adapt to any given electrical machine hardware configuration. It will be equally obvious, that the capacitance value being dependent upon the electrode areas facing each other, the capacitor value could be adjusted to any desired value, at manufacturing time, or even after, by simply cutting off portions of an over-sized capacitor. In the same manner, openings can be adapted to any kind of connector type and shape.

Capacitance values of 4nF to 20nF were easily reached with the invention. Corresponding impedance between local and remote ground potentials was measured above 190kohms at the industrial frequency of 50Hz, around 1ohm for frequencies above 10MHz, and around 0.3ohm for frequencies above 30MHz.

Manufacturing of such a capacitor involves well-known techniques of lamination, pressing, chemical etching, etc...

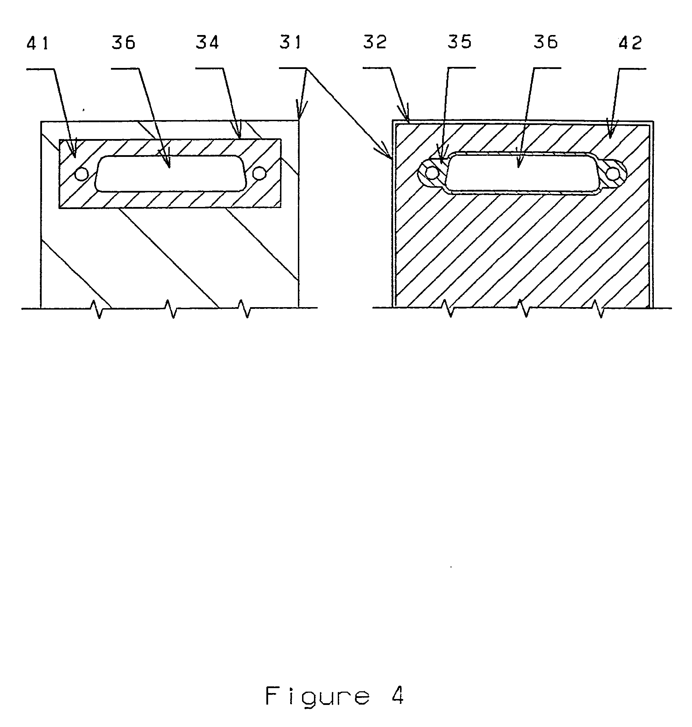

Figure 4 shows a detailed view of both the back (left view) and front (right view) electrodes of capacitor 1.

Area 41 defines the portion of the back electrode meant for mechanical and electrical contact with the portion of connector 7 facing the capacitor plan, and being at the remote ground potential. It is the area comprised between openings 34 (opening in the coverlay) and 36 (smallest opening for all layers for letting protruding part of connector 7 thru the capacitor plan).

Area 42 defines the portion of the front electrode available for mechanical and electrical contact with a part at the local ground potential. It is to be noticed that outer limits (32) of that area, can be designed to stay within about 1mm of the outer limit 31. This can be done to avoid lightning effect between the two electrodes, when high voltage differences (500V and above) are expected between the local and remote ground potentials.

It is also to be noticed that in order to minimize electrical contact inductance, the smallest measured dimension in both areas 41 and 42 must be kept at an acceptable level: i.e. the minimum distance between outer limits of 36 and outer limits of 34, as well as the minimum distance between outer limits of 35 and outer limits of 32.

## Claims

1. A flexible capacitor which comprises:
- flexible dielectric layer means (26), coated with conductive material means (24, 28) on both sides via the use of adhesive means (25, 27), the conductive material means forming a first and a second electrode,
- a first opening (36) in the flexible dielectric means and the first electrode, of a first shape so as to allow the mechanical traversing of the capacitor plan by a protruding part of a connector (7), and
- a second opening (35) in the second electrode, aligned with the first opening, of a second shape slightly larger than, but encompassing the first shape.

2. The capacitor according to claim 1, further characterized in that the conductive material means are coated with anti-oxidation means (23, 29) for at least one electrode.

3. The capacitor according to claim 1 or claim 2, characterized in that at least one electrode is partly covered with insulating material means (21), via the use of adhesive means (22).

4. The capacitor according to any of the claims 1 to 3, characterized in that the first electrode is in first mechanical and electrical contact with a part of the connector at a first ground potential, and the second electrode is in second mechanical and electrical contact with a part of a frame (2,8,5) at a second ground potential, said frame being mechanically bound to the connector.

5. The capacitor according to claim 4, characterized in that at least one mechanical and electrical contact is improved by the use of a conductive gasket.

6. The capacitor according to claim 4 or claim 5, characterized in that the first and second mechanical and electrical contacts feature a geometrically plane shape, surrounding and concentric with the protruding part of the connector.

7. An assembly comprising:
- a first connector (7) having a first protruding part of conductive material,
- a panel (2) of an electrical machine being of conductive material at least in its inner surface, and having an opening so as to allow the mechanical traversing of the panel plan by the first protruding part, and
- a matching connector to be plugged-in the first connector, having a second protruding part of conductive material to be in mechanical and electrical contact with the first protruding part,
said assembly being characterized in that it also comprises:
- a capacitor (1) according to any of the claims 1 to 6, having the first electrode electrically connected to the first and second protruding parts, and the second electrode electrically connected to the panel inner surface.

8. A method, in a connection between a local and a remote electrical machine, involving a shielded cable with the cable shield being at a remote ground potential of the remote machine, of mechanically and electrically inserting the flexible capacitor according to any of the claims 1 to 6, between the cable shield, and a part of the local machine being at a local ground potential.

## Patentansprüche

1. Flexibler Kondensator, der umfaßt:
- flexible dielektrische Schichtmittel (26), die unter der Verwendung von Klebemitteln (25, 27) auf beiden Seiten mit leitfähigen Materialmitteln (24, 28) überzogen sind, wobei die leitfähigen Materialmittel eine erste und eine zweite Elektrode bilden,
- eine erste Öffnung (36) in den flexiblen dielektrischen Mitteln und der ersten Elektrode von einer ersten Form, um das mechanische Durchtreten der Kondensatorfläche durch ein hervorstehendes Teil eines Verbinders (7) zu ermöglichen, und
- eine zweite Öffnung (35) in der zweiten Elektrode, die nach der ersten Öffnung ausgerichtet ist, von einer zweiten Form, die etwas größer als die erste Form ist, aber sie umgibt.

2. Kondensator nach Anspruch 1, weiterhin dadurch gekennzeichnet, daß die leitfähigen Materialmittel mit Antioxidationsmitteln (23, 29) für wenigstens eine Elektrode überzogen sind.

3. Kondensator nach Anspruch 1 oder Anspruch 2, dadurch gekennzeichnet, daß wenigstens eine Elektrode teilweise unter der Verwendung von Klebemitteln (22) mit isolierenden Materialmitteln (21) überzogen ist.

4. Kondensator nach einem der Ansprüche 1 bis 3, dadurch gekennzeichnet, daß die erste Elektrode sich in erstem mechanischem und elektrischem Kontakt mit einem Teil des Verbinders auf einem ersten Massepotential befindet und die zweite Elektrode sich in zweitem mechanischem und elektrischem Kontakt mit einem Teil eines Gehäuses (2, 8, 5) auf einem zweiten Massepotential befindet, wobei das Gehäuse mechanisch mit dem Verbinder verbunden ist.

5. Kondensator nach Anspruch 4, dadurch gekennzeichnet, daß wenigstens ein mechanischer und elektrischer Kontakt durch die Verwendung einer leitfähigen Dichtung verbessert ist.

6. Kondensator nach Anspruch 4 oder Anspruch 5, dadurch gekennzeichnet, daß der erste und zweite mechanische und elektrische Kontakt eine geometrisch ebene Form, die den hervorstehenden Teil des Verbinders umgibt und konzentrisch mit ihm ist, als Merkmal aufweisen.

7. Anordnung umfassend:
- einen ersten Verbinder (7), der ein erstes hervorstehendes Teil aus leitfähigem Material aufweist,
- eine Wand (2) eines elektrischen Gerätes, die wenigstens an ihrer inneren Oberfläche aus leitfähigem Material besteht und eine Öffnung aufweist, um das mechanische Durchtreten der Wandfläche durch das erste hervorstehende Teil zu ermöglichen, und
- einen in den ersten Verbinder einzusteckenden passenden Verbinder, der ein zweites hervorstehendes Teil aus leitfähigem Material aufweist, um sich mit dem ersten hervorstehenden Teil in mechanischem und elektrischem Kontakt zu befinden,
wobei die Anordnung dadurch gekennzeichnet ist, daß sie außerdem umfaßt:
- einen Kondensator (1) nach einem der Ansprüche 1 bis 6, dessen erste Elektrode mit dem ersten und zweiten hervorstehenden Teil elektrisch verbunden ist und dessen zweiten Elektrode mit der inneren Oberfläche der Wand elektrisch verbunden ist.

8. Verfahren, in einer Verbindung zwischen einem lokalen und einem entfernten elektrischen Gerät unter Einbeziehung eines abgeschirmten Kabels, wobei die Kabelabschirmung auf einem entfernten Massepotential des entfernten Gerätes liegt, mechanisch und elektrisch den flexiblen Kondensator nach einem der Ansprüche 1 bis 6 zwischen die Kabelabschirmung und einem Teil des lokalen Gerätes, das auf einem lokalen Massepotential liegt, einzufügen.

## Revendications

1. Un condensateur flexible qui comprend:
- un moyen à couche diélectrique flexible (26) revêtue de moyens de matériau conducteur (24, 28) sur ses deux côtés en utilisant des moyens adhésifs (25, 27), les moyens de matériau conducteur formant une première et une seconde électrodes,
- une première ouverture (36) dans le moyen diélectrique flexible et la première électrode, d'une première forme pour permettre la traversée mécanique du plan du condensateur par une partie protubérante d'un connecteur (7), et
- une seconde ouverture (35) dans la seconde électrode, alignée avec la première ouverture, d'une seconde forme légèrement plus grande que la première forme et englobant cette dernière.

2. Le condensateur selon la revendication 1 caractérisé en outre en ce que les moyens de matériau conducteur sont revêtus de moyens anti-oxydation (23, 29) pour au moins une électrode.

3. Le condensateur selon la revendication 1 ou la revendication 2 caractérisé en ce qu'au moins une électrode est partiellement recouverte avec le moyen de matériau isolant (21) en utilisant le moyen adhésif (22).

4. Le condensateur selon l'une quelconque des revendications 1 à 3, caractérisé en ce que la première électrode est dans un premier contact mécanique et électrique avec une partie du connecteur à un premier potentiel de masse, et en ce que la seconde électrode est dans un second contact mécanique et électrique avec une partie d'un chassis (2, 8, 5) à un second potentiel de masse, ledit chassis étant mécaniquement relié au connecteur.

5. Le condensateur selon la revendication 4, caractérisé en ce qu'au moins un contact mécanique et électrique est amélioré par l'utilisation d'un joint d'étanchéité conducteur.

6. Le condensateur selon la revendication 4 ou la revendication 5, caractérisé en ce que le premier et le second contacts mécaniques et électriques présentent une forme géométriquement plane entourant la partie protubérante du connecteur et disposée concentriquement par rapport à cette dernière.

7. Un ensemble comprenant:
- un premier connecteur (7) comportant une première partie protubérante de matériau conducteur,
- un panneau (2) d'une machine électrique, dont au moins la surface intérieure est en matériau conducteur, et présentant une ouverture pour permettre la traversée mécanique du plan du panneau par la première partie protubérante, et
- un connecteur correspondant pour être enfiché dans le premier connecteur, comportant une seconde partie protubérante de matériau conducteur pour être en contact mécanique et électrique avec la première partie protubérante,
ledit ensemble étant caractérisé en ce qu'il comprend en outre:
- un condensateur (1) selon l'une quelconque des revendications 1 à 6, dont la première électrode est électriquement connectée à la première et à la seconde parties protubérantes, et dont la seconde électrode est électriquement connectée à la surface intérieure du panneau.

8. Une méthode appliquée dans une connexion entre une machine électrique locale et une machine électrique à distance, impliquant un câble blindé, le blindage du câble étant à un potentiel de masse à distance de la machine à distance, pour mécaniquement et électriquement insérer le condensateur flexible de l'une quelconque des revendications 1 à 6, entre le blindage du câble et une partie de la machine locale à un potentiel de masse local.
